# EUROPEAN PATENT APPLICATION

(11) **EP 4 579 623 A1**
(43) Date of publication of application: **02.07.2025**
(21) Application number: 23856905.7
(22) Date of filing: 10.05.2023
(51) Int. Cl.: G07G 1/00, G07G 1/01, G07G 1/12

(54) **PAYMENT DEVICE, PAYMENT PROGRAM, AND COMPUTER-READABLE STORAGE MEDIUM**

(30) Priority: 23.08.2022 JP 2022132661
(71) Applicant: Toshiba TEC Kabushiki Kaisha, Tokyo 141-8562 (JP)
(72) Inventor: SUGIYAMA, Ayumi, Izunokuni-shi, Shizuoka 410-2392 (JP)
(74) Representative: Bandpay & Greuter
(86) International application number: PCT/JP2023/017579
(87) International publication number: WO 2024/042785

(57) **Abstract**

An object is to enable not only products self-registered by an information terminal but also products additionally registered by a payment device to be processed as a single commercial transaction.

A payment device includes a first acquisition unit, a second acquisition unit, and a payment unit. The first acquisition unit acquires information on products based on product data entered via an input device. The second acquisition unit acquires, from an external system, information on the products stored based on product data entered via an information terminal. The payment unit makes a payment based on the product information acquired by the first acquisition unit and the second acquisition unit.

## Description

### FIELD

Embodiments described herein relate generally to a payment device, a payment program, and a computer-readable storage medium.

### BACKGROUND

In a sales area where products are displayed, a self-registration system allows a customer to use an information terminal such as a smartphone or a tablet to register the products the customer wishes to purchase, eliminating the need for product registration at the time of checkout. When the customer using this system finishes shopping in the sales area, the customer performs an operation on the information terminal to declare payment. Through this operation, a checkout code, consisting of a barcode or a two-dimensional code, is displayed on the display device of the information terminal, so that the customer proceeds to the checkout counter and scans the checkout code by using the scanner provided in a payment device. Then, the data on the products self-registered by the information terminal is downloaded to the payment device, the total price is calculated, and the customer proceeds to pay.

In the conventional self-registration system of this type, additional product registration cannot be performed on the payment device where the data on products self-registered by the information terminal has been downloaded. For a customer using this system, for example, if the customer realizes he or she forgot to purchase a product after declaring payment, the customer can cancel the payment declaration on the information terminal, returning it to the state before the declaration. Thereafter, the customer performs a registration operation of a product to be additionally purchased on the information terminal, and performs the operation of the payment declaration again. As described above, in a case where a product is added after the payment declaration, the operation of the information terminal is complicated and cumbersome, leading to poor usability and a waste of time.

### Citation List

### [Patent Literature]

Patent Document 1: Jpn. Pat. Appln. KOKAI Publication No. 2011-113548

### SUMMARY

### TECHNICAL PROBLEM

An object of the present invention is to provide a payment device that enables not only products self-registered by an information terminal but also those additionally registered by the payment device to be processed as a single commercial transaction.

### BRIEF DESCRIPTION OF THE DRAWINGS

FIG. 1 is a schematic configuration diagram of a self-registration system according to one embodiment.
FIG. 2 is a block diagram showing the main circuit configuration of an information terminal.
FIG. 3 is a schematic diagram showing a main data structure stored in a shopping file.
FIG. 4 is a block diagram showing the main circuit configuration of a POS terminal.
FIG. 5 is a schematic diagram showing a main data structure stored in a transaction file.
FIG. 6 is a flowchart illustrating the main procedure of the information processing that the processor of an information terminal executes according to a self-registration program.
FIG. 7 is a flowchart illustrating the main procedure of a shopping start notification command receipt process executed by a terminal controller.
FIG. 8 is a flowchart illustrating the main procedure of a registration start notification command receipt process executed by the terminal controller.
FIG. 9 is a flowchart illustrating the main procedure of a checkout notification command receipt process executed by the terminal controller.
FIG. 10 is a flowchart illustrating the first half of the main procedure of the information processing that the processor of the POS terminal executes according to a payment program.
FIG. 11 is a flowchart illustrating the latter half of the main procedure of the information processing that the processor of the POS terminal executes according to the payment program.
FIG. 12 is a flowchart illustrating the main procedure of an inquiry command receipt process executed by the terminal controller.
FIG. 13 is a schematic diagram showing an example of a registration details screen displayed on the display device of the POS terminal.
FIG. 14 is a schematic diagram showing main functions of a processor of a POS terminal of a second embodiment.
FIG. 15 is a flowchart illustrating the first half of the main procedure of information processing executed by the processor of the POS terminal according to the payment program in the second embodiment.
FIG. 16 is a schematic diagram showing main functions of a processor of a POS terminal of a third embodiment.
FIG. 17 is a flowchart illustrating the first half of the main procedure of information processing executed by the processor of the POS terminal according to the payment program in the third embodiment.

### DETAILED DESCRIPTION

In one embodiment, a payment device includes a first acquisition unit, a second acquisition unit, and a payment unit. The first acquisition unit acquires information on products based on product data entered via an input device. The second acquisition unit acquires, from an external system, information on the products stored based on product data entered via an information terminal. The payment unit makes a payment based on the product information acquired by the first acquisition unit and the second acquisition unit.

In what follows, embodiments of a self-registration system, including a payment device capable of processing a single commercial transaction that covers not only products registered by the information terminal but also those additionally registered by the payment device, will be described with reference to the accompanying drawings.

### [First Embodiment]

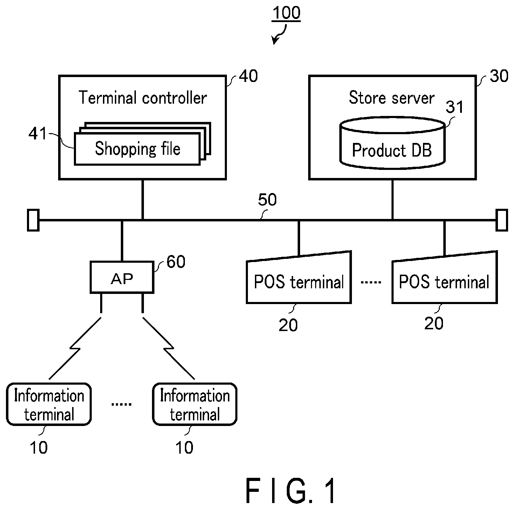

FIG. 1 is a schematic configuration diagram of a self-registration system 100 according to the present embodiment. The self-registration system 100 includes an information terminal 10 for self-registration, a POS (point of sales) terminal 20 that functions as a payment device for self-registration, a store server 30, and a terminal controller 40. The POS terminal 20, the store server 30, and the terminal controller 40 are coupled to each other via a communication network 50 such as a LAN (local area network) such that they are capable of bidirectional communications.

A well-known POS system is configured by coupling a plurality of POS terminals 20 and the store server 30 via the communication network 50. In other words, each POS terminal 20 is an information processing terminal equipped with a product registration function and a commercial transaction payment function. The store server 30 is a computer that centrally manages the product registration and commercial transaction payment functions of each POS terminal 20. To provide this service, the store server 30 includes a product database 31. The product database 31 is a collection of product records created for each product. A product record is a record of product data such as a product code, a product name, and a price. The product code is a unique code set for each product to identify it individually. The product name and price are the sales name and unit price of a product identified by the corresponding product code. In a case where a product code is entered via the input device of the POS terminal 20, the store server 30 provides the POS terminal 20 with a product record including that product code. The POS terminal 20 registers product sales data, based on the product data in the product record. The store server 30 manages information such as sales and inventory at the time of product sales in real time, based on the product sales data registered by each POS terminal 20. Since the functions of such a POS system are well known, a detailed description thereof will be omitted.

An access point 60 is further coupled to the communication network 50. The access point 60 is installed in the sales area where products are displayed. A plurality of access points 60 may be installed in a distributed manner in the sales area. The information terminal 10 is a small communication terminal that a customer uses to register the products he or she wishes to purchase. In a case where a customer uses the information terminal 10 in the sales area, the information terminal 10 can communicate with the terminal controller 40 coupled to the communication network 50 through the access point 60.

The information terminal 10 may be a smartphone owned by the customer, or a mobile terminal or a tablet terminal lent to the customer by the store. In the case of the tablet terminal, it may be attached to a shopping cart and lent to the customer. In the case of the smartphone or mobile terminal, the customer may hold it in hand or place it on the terminal holder of the shopping cart for use.

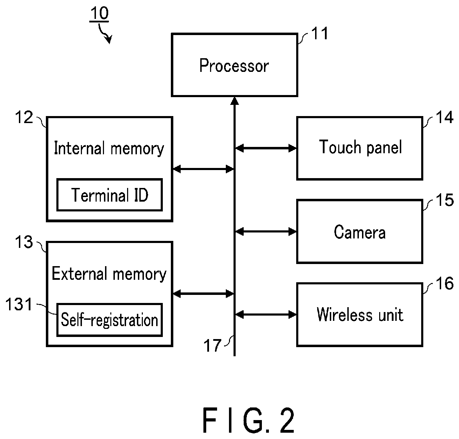

FIG. 2 is a block diagram showing the main circuit configuration of the information terminal 10. As shown in FIG. 2, the information terminal 10 includes a processor 11, an internal memory 12, an external memory 13, a touch panel 14, a camera 15, a wireless unit 16, and a system transmission path 17. The system transmission path 17 includes an address bus, a data bus, a control signal line, etc. The information terminal 10 couples the processor 11, the internal memory 12, the external memory 13, the touch panel 14, the camera 15, and the wireless unit 16 to the system transmission path 17. In the information terminal 10, a computer is constituted by the processor 11, the internal memory 12, the external memory 13, and the system transmission path 17 that connects them.

The processor 11 corresponds to the central portion of the computer described above. The processor 11 controls each portion to implement various functions of the information terminal 10 according to an operating system or an application program (application software). The processor 11 may be a processing circuit such as a CPU (central processing unit), a GPU (graphics processing unit), an application specific integrated circuit (ASIC), or a programmable logic device (e.g., a simple programmable logic device (SPLD), a complex programmable logic device (CPLD), or a field programmable gate array (FPGA)). The processor 11 need not be configured as a single processing circuit but may be configured as a processor 11 obtained by combining a plurality of processing circuits. The same applies to the other processors of the present embodiment as well.

The internal memory 12 may be a volatile memory (a random access memory) or a non-volatile memory (a read only memory or a non-volatile random access memory). The internal memory 12 stores information processing programs and data necessary for information processing. The processor 11 implements predetermined functions by reading and executing the programs stored in the internal memory 12. The programs may be incorporated directly into the processor 11 instead of being stored in the internal memory 12. In this case, the processor 11 implements predetermined functions by reading and executing the programs incorporated in the processor 11. In addition, the predetermined functions can be implemented not only by the processor 11 executing the programs but also through a combination of logic circuits. The same applies also to the other main memories of the present embodiment.

The external memory 13 corresponds to the auxiliary storage portion of the computer mentioned above. For example, an SD memory card, a USB memory, etc. can be the external memory 13. The external memory 13 stores data used by the processor 11 for various processes, as well as data generated by the processor 11 during the processes. The external memory 13 may also store the application program mentioned above.

The touch panel 14 is a display device capable of displaying display elements such as characters, symbols and images on the display. The touch panel 14 is also an input device that detects the position of a touch operation on the display with a sensor and processes the display element at that position as an input.

The camera 15 is an imaging device built into the information terminal 10. The processor 11 has a function as a reading unit that reads machine-readable codes such as barcodes and two-dimensional codes from an image captured by the camera 15. Many products are affixed with barcodes that express the product codes in a predetermined barcode system. The processor 11 can obtain the product code of a product held up to the camera 15 by reading the barcode attached to the product from the image captured by the camera 15.

The wireless unit 16 is a communication device that performs data communications with the access point 60 according to a wireless LAN communication protocol.

The information terminal 10 configured in this manner stores a terminal ID in a non-volatile memory area of the internal memory 12. The terminal ID is a unique identifier set for each information terminal 10 to individually identify the information terminal 10. The terminal ID may be stored in the external memory 13.

The information terminal 10 also stores a self-registration program 131 in the external memory 13. The self-registration program 131 is application software for enabling self-registration of products by using the information terminal 10. In other words, by installing the self-registration program 131 in a communication terminal such as a smartphone or a tablet terminal, the communication terminal can be used as an information terminal 10 for self-registration. The self-registration program 131 may be stored in the internal memory 12.

Returning to FIG. 1, the terminal controller 40 is a computer device for supporting the self-registration function of the information terminal 10. To support this, the terminal controller 40 creates a shopping file 41 for each information terminal 10. The terminal controller 40 then stores data on products self-registered by the information terminal 10 in the shopping file 41. The terminal controller 40 has the function of transferring the data in the shopping file 41 to the POS terminal 20, which is a payment device, in a case where a payment declaration is made on that information terminal 10.

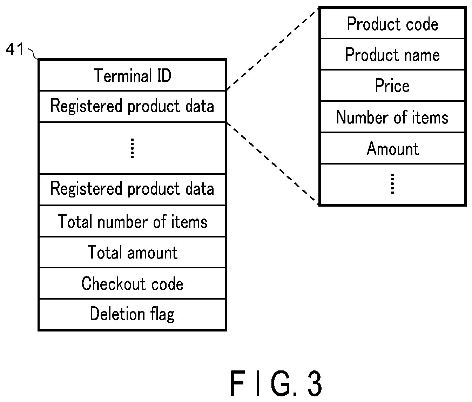

FIG. 3 is a schematic diagram showing a main data structure stored in the shopping file 41. As shown in the figure, the shopping file 41 stores data such as a terminal ID, registered product data, a total number of items, a total amount, a checkout code, and a deletion flag.

The terminal ID is an identifier for the information terminal 10, as described above. The registered product data is data created for each of the products that are self-registered by the information terminal 10 identified by the terminal ID. The registered product data includes elements such as a product code, a product name, a price, a number of items, and an amount. The number of items is the registered number of items for the same product. The amount is an amount for the number of registered items. The shopping file 41 can store a plurality of registered product data. The total number of items is the sum of number of registered items for each piece of registered product data. The total amount is the sum of the registered amounts from each piece of registered product data.

The checkout code is a unique code generated in response to a checkout declaration made on the information terminal 10 identified by the terminal ID. A machine-readable barcode or two-dimensional code representing the checkout code is displayed on the display device of the information terminal 10.

The deletion flag is one-bit data for identifying whether the shopping file 41 is in a deleted state or not. The shopping file 41 is deleted in a case where the payment for the products identified by the registered product data is made and the payment is completed. In the present embodiment, the deletion flag is set to "1" for a deleted state and "0" for a non-deleted state.

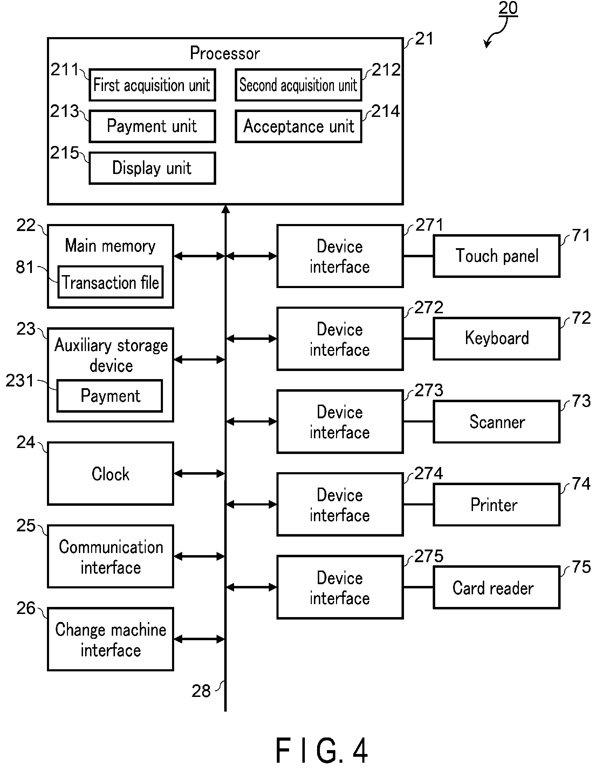

FIG. 4 is a block diagram showing the main circuit configuration of the POS terminal 20. As shown in the figure, the POS terminal 20 includes a processor 21, a main memory 22, an auxiliary storage device 23, a clock 24, a communication interface 25, a change machine interface 26, a plurality of device interfaces 271-275, and a system transmission path 28. The system transmission path 28 includes an address bus, a data bus, a control signal line, etc. The POS terminal 20 constitutes a computer by coupling the processor 21 to the main memory 22, the auxiliary storage device 23, the clock 24, the communication interface 25, the change machine interface 26, and the plurality of device interfaces 271-275 via the system transmission path 28.

Various devices such as a touch panel 71, a keyboard 72, a scanner 73, a printer 74, and a card reader 75 are coupled to the device interfaces 271-275 of this computer.

The processor 21 corresponds to the central portion of the computer. The processor 21 controls each portion to implement various functions of the POS terminal 20 in accordance with an operating system or application programs. The processor 21 is, for example, a CPU.

The main memory 22 corresponds to the main storage portion of the computer mentioned above. The main memory 22 includes a non-volatile memory area and a volatile memory area. The main memory 22 stores the operating system or application programs in the non-volatile memory area. The main memory 22 may also store, in its non-volatile or volatile memory area, data required for the processor 21 to execute processes to control each portion. The main memory 22 uses the volatile memory area as a work area where data is appropriately rewritten by the processor 21. The non-volatile memory area is, for example, a ROM. The volatile memory area is, for example, a RAM.

The auxiliary storage device 23 corresponds to the auxiliary storage portion of the computer mentioned above. For example, the auxiliary storage device 23 can be an EEPROM (electric erasable programmable read-only memory), an HDD (hard disk drive), or an SSD (solid state drive). The auxiliary storage device 23 stores data used by the processor 21 for various processes, or data generated by the processor 21 during the processes. The auxiliary storage device 23 may also store the application programs mentioned above.

The clock 24 keeps track of the date and time. The processor 21 processes the date and time kept by the clock 24 as the current date and time.

The communication interface 25 is a circuit for performing data communications with an external device coupled via the communication network 50. The external device is a store server 30 or a terminal controller 40. The external device may be a computer device other than the store server 30 and the terminal controller 40.

The change machine interface 26 is a circuit for performing data communications with an automatic change machine (not shown). For example, the change machine interface 26 receives, from the automatic change machine, inserted amount data, which is the total amount of bills or coins inserted into the automatic change machine. The change machine interface 26 also transmits the change data calculated from the inserted amount and the payment amount to the automatic change machine. The automatic change machine that has received the change data dispenses bills or coins equivalent to the amount of change.

The device interface 271 is a circuit for performing data communications with the touch panel 71. The touch panel 71 is a display device capable of displaying display elements such as characters, symbols, and images on the display. The touch panel 71 is also an input device that detects the touch operation position on the display with a sensor and processes the display element at that position as an input.

The device interface 272 is a circuit for performing data communications with the keyboard 72. The keyboard 72 is an input device that has various keys required of the POS terminal 20, such as a numeric keypad, a PLU (price look-up) key, a subtotal key, a closing key, a cancel key, a clear key, etc., and processes key signals from keys that are operated.

The device interface 273 is a circuit for performing data communications with the scanner 73. The scanner 73 is an optical input device that uses light to scan and read machine-readable codes such as barcodes and two-dimensional codes. The scanner 73 may be an imaging input device that reads machine-readable codes from images captured by a camera. The scanner 73 can read not only machine-readable codes attached to products but also machine-readable codes displayed on the touch panel 14 of the information terminal 10.

The device interface 274 is a circuit for performing data communications with the printer 74. The printer 74 is a printing device that prints data related to commercial transactions onto paper media, issuing receipts, invoices, warranty cards, etc.

The device interface 275 is a circuit for performing data communications with the card reader 75. The card reader 75 is an input device that reads data from card media such as credit cards, electronic money cards, and point cards, and processes the read card data. The card reader 75 may be a magnetic card reader compatible with magnetic cards, or an IC card reader compatible with IC cards. In addition, the magnetic card reader and the IC card reader may be used in combination. The IC card reader may be a non-contact IC card reader or a contact IC card reader. Additionally, the card reader may be a card reader-writer equipped with a data writing function.

The POS terminal 20 configured as described above uses a portion of the volatile memory area of the main memory 22 as an area for a transaction file 81. The transaction file 81 is a data file for storing data related to one commercial transaction processed by the POS terminal 20.

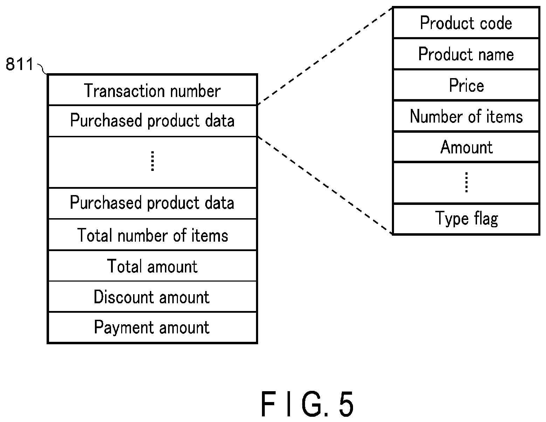

FIG. 5 is a schematic diagram showing the main data structure stored in the transaction file 81. As shown in the figure, the transaction file 81 stores data such as a transaction number, purchased product data, a total number of items, a total amount, a discount amount, and a payment amount.

The transaction number is a sequential number that is issued each time a transaction is processed by the POS terminal 20. The purchased product data is record data created for each of the products that are sold in commercial transactions identified by the transaction numbers.

The purchased product data is composed of elements such as a product code, a product name, a price, a number of items, an amount, and a type flag. The number of items refers to the number of products purchased and identified by the product code. The amount is an amount for the number of items purchased. The type flag is one-bit data that identifies whether the purchased product data is for a product registered on the POS terminal 20 or for a product self-registered on the information terminal 10. In the present embodiment, the type flag is set to "0" if the data is for a product registered on the POS terminal 20, and to "1" if the data is for a product self-registered on the information terminal 10.

The transaction file 81 can store a plurality of purchased product data. Specifically, the transaction file 81 can store the purchased product data for both products registered on the POS terminal 20 and products self-registered on the information terminal 10, combining them as the purchased product data for a single commercial transaction. Storing such data corresponds to a commercial transaction in which products registered on the POS terminal 20 are added to products self-registered on the information terminal 10. The transaction file 81 can also store only the purchased product data for the products registered on the POS terminal 20, or only the purchased product data for the products self-registered on the information terminal 10. The former corresponds to a commercial transaction in which only the products registered on the POS terminal 20 are processed, and the latter corresponds to a commercial transaction in which only the products self-registered on the information terminal 10 are processed.

The total number of items is the sum of the numbers of items in each set of purchased product data. The total amount is the sum of the amounts in each set of purchased product data. The discount amount is an amount discounted from the total amount. The payment amount is the total amount minus any discounts.

In order for the POS terminal 20 to operate as a payment device for the self-registration system, the processor 21 has the functions of a first acquisition unit 211, a second acquisition unit 212, a payment unit 213, an acceptance unit 214, and a display unit 215.

The first acquisition unit 211 has the function of acquiring product information, based on product-related data entered via an input device such as the keyboard 72 or scanner 73. In other words, the product information acquired by the first acquisition unit 211 is purchased product data for products registered on the POS terminal 20.

The second acquisition unit 212 has the function of acquiring stored product information from an external system, i.e., the terminal controller 40, based on product-related data entered via the information terminal 10. In other words, the product information acquired by the second acquisition unit 212 corresponds to registered product data on the products self-registered on the information terminal 10.

The payment unit 213 has the function of making a payment based on the product information acquired by the first acquisition unit 211 and the second acquisition unit 212. Specifically, the payment unit has the function of calculating the payment amount for a commercial transaction based on the product information acquired by the first acquisition unit 211 and the second acquisition unit 212, receiving a payment equivalent to the payment amount, and settling the commercial transaction.

The acceptance unit 214 has the function of accepting identification information that identifies the product information acquired from the external system, that is, a checkout code. It should be noted that the payment unit 213 processes the payment for the commercial transaction in response to receiving the checkout code through the acceptance unit 214.

The display unit 215 has the function of displaying the product information acquired by the first acquisition unit 211 and the product information acquired by the second acquisition unit 212 in a distinguishable manner. For example, in a case where a list of product information acquired by the first acquisition unit 211 and the second acquisition unit 212 is displayed on a single screen, the display unit 215 distinguishes the product information from each unit by adding a unique symbol to the information from one acquisition unit, provided that the information is not available from the other unit. Alternatively, in a case where a list of product information acquired by the first acquisition unit 211 and the second acquisition unit 212 is displayed on a single screen, the display unit 215 distinguishes the product information by displaying it separately for each product, clearly indicating which information belongs to each acquisition unit.

The functions of the first acquisition unit 211, the second acquisition unit 212, the payment unit 213, the acceptance unit 214, and the display unit 215 are realized by the information processing that the processor 21 executes according to a payment program 231. The payment program 231 is installed in the auxiliary storage device 23. The payment program 231 may be installed in the main memory 22. There is no particular limitation on the method of installing the payment program 231 in the main memory 22 or the auxiliary storage device 23. The payment program 231 can be installed in the main memory 22 or the auxiliary storage device 23 by recording it onto a removable recording medium, or by distributing it via network communications. The recording medium can be any type, such as an SD memory card or a USB memory, as long as it can store a program and is readable by a device.

In the self-registration system 100 of the present embodiment, the POS terminal 20 is installed in a checkout area that is separate from the sales area of the store. The store server 30 and the terminal controller 40 are installed in a back room of the store. At least one of the store server 30 and the terminal controller 40 may be implemented in the cloud in a system that utilizes cloud computing.

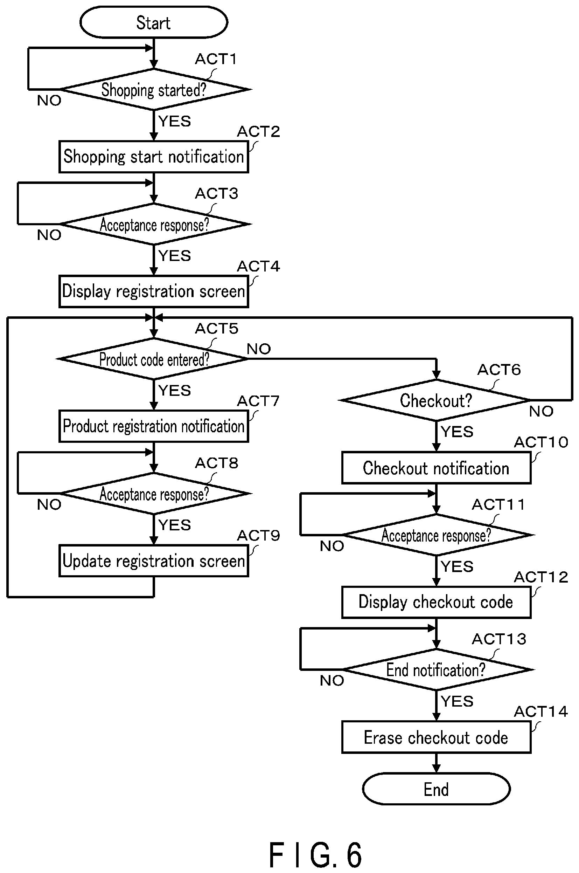

Upon arriving at the store, the customer places products to be purchased into a shopping cart or similar container in the sales area where the products are displayed. The customer then uses the information terminal 10 to self-register the products that he or she wishes to purchase. Next, with reference to FIG. 6 through FIG. 9, the operation of the self-registration system 100 when a customer performs self-registration will be described.

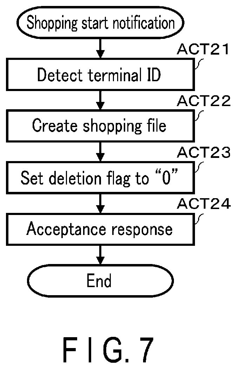

FIG. 6 is a flowchart illustrating the main procedure of the information processing that the processor 11 of the information terminal 10 executes according to the self-registration program 131. FIG. 7 through FIG. 9 are flowcharts illustrating the main procedure of the information processing that the terminal controller 40 executes in response to the information processing executed by the information terminal 10. It should be noted that the procedures and contents of the information processing described below are merely examples. The procedures and contents are not particularly limited as long as similar results can be obtained.

In a case where the self-registration program 131 is started, the processor 11 of the information terminal 10 starts information processing according to the steps shown in the flowchart in FIG. 6. In ACT1, the processor 11 waits for an instruction to start shopping. For example, on the touch panel 14 of the information terminal 10 on which the self-registration program 131 has been started, a shopping start button is displayed as a display element. A customer using the information terminal 10 to self-register products to be purchased first touches the shopping start button.

If the processor 11 detects that the shopping start button has been touched, it determines that a shopping start has been instructed. The processor 11 proceeds from ACT1 to ACT2. In ACT2, the processor 11 controls the wireless unit 16 to output a shopping start notification command to the terminal controller 40. As a result of this control, the shopping start notification command is transmitted from the wireless unit 16. The shopping start notification command is received by the access point 60 and transmitted to the terminal controller 40 via the communications network 50. The shopping start notification command includes the terminal ID of the information terminal 10.

FIG. 7 is a flowchart illustrating the main procedure of a shopping start notification command receipt process executed by the terminal controller 40. In a case where the terminal controller 40 receives the shopping start notification command, it detects the terminal ID from the shopping start notification command in ACT21. Then, in ACT22, the terminal controller 40 creates a shopping file 41 including the terminal ID in the storage unit. In ACT23, the terminal controller 40 sets the deletion flag of the shopping file 41 to the value "0," indicating a non-deleted state. Thereafter, in ACT24, the terminal controller 40 transmits an acceptance response command to the information terminal 10 that transmitted the shopping start notification command. In the above manner, the terminal controller 40 completes the receipt process of the shopping start notification command.

The acceptance response command includes the terminal ID included in the shopping start notification command. The acceptance response command is wirelessly transmitted via the access point 60 of the communication network 50. The acceptance response command is received by the information terminal 10 to which the terminal ID included in the command is set.

Returning to FIG. 6, the information terminal 10 that transmitted the shopping start notification command waits for an acceptance response command to be issued in ACT3. Upon receipt of the acceptance response command via the wireless unit 16, the processor 11 proceeds from ACT3 to ACT4. In ACT4, the processor 11 sets the screen of the touch panel 14 to a registration screen. The registration screen includes an area for displaying, in list form, the product name, price, number of items, and other details of a product self-registered by the information terminal 10.

The processor 11 of the information terminal 10 displaying the registration screen waits for a product code to be entered in ACT5, or for a checkout instruction to be given in ACT6. For example, in a case where the camera 15 photographs the barcode of a product and a product code is detected from the barcode, the processor 11 recognizes that the product code has been entered. The processor 11 proceeds from ACT5 to ACT7. In ACT7, the processor 11 controls the wireless unit 16 to output a product registration notification command to the terminal controller 40. As a result of this control, the product registration notification command is transmitted from the wireless unit 16. The product registration notification command is received by the access point 60 and transmitted to the terminal controller 40 via the communication network 50. The product registration notification command includes the terminal ID of the information terminal 10 and the entered product code.

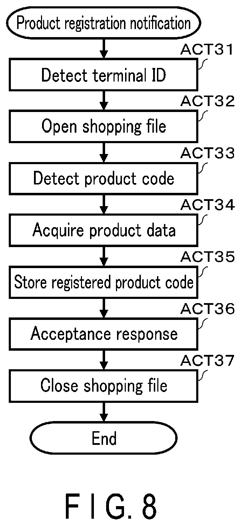

FIG. 8 is a flowchart illustrating the main procedure of a product registration notification command receipt process executed by the terminal controller 40. In a case where the terminal controller 40 receives the product registration notification command, it detects a terminal ID from the product registration notification command in ACT31. Then, in ACT32, the terminal controller 40 opens the shopping file 41 in which the terminal ID is stored.

The terminal controller 40 detects the product code from the product registration notification command in ACT33. Then, the terminal controller 40 accesses the store server 30 via the communication network 50 and acquires product data such as the product name and price from the product record including the product code in ACT34. In ACT35, the terminal controller 40, having acquired the product data, creates registered product data, using a product code, product name, price, number of items, an amount, and other details, and stores the registered product data in the shopping file 41 in an open state.

Thereafter, in ACT36, the terminal controller 40 transmits an acceptance response command to the information terminal 10 that transmitted the product registration notification command. In ACT37, the terminal controller 40 also closes the shopping file 41 that has been open until then. In the above manner, the terminal controller 40 completes the receipt process of the product registration notification command.

The acceptance response command includes the terminal ID included in the product registration notification command. The acceptance response command also includes the product name, price, number of items, and other details of the registered product data. The acceptance response command is transmitted wirelessly via the access point 60 of the communication network 50. The acceptance response command is received by the information terminal 10 to which the terminal ID included in the command is set.

Returning to FIG. 6, the processor 11 of the information terminal 10 that transmitted the product registration notification command waits for an acceptance response command to be issued in ACT8. Upon receipt of the acceptance response command via the wireless unit 16, the processor 11 proceeds from ACT8 to ACT9. In ACT9, the processor 11 updates the registration screen so that the product name, price, number of items, etc. included in the acceptance response command are displayed. Thereafter, the processor 11 returns to the standby state of ACT5 and ACT6.

If the next product code is entered in the standby state of ACT5 and ACT6, the processor 11 executes the processes of ACT7 to ACT9 in the same manner as described above. The terminal controller 40 executes the receipt process of the product registration notification command in the same manner as described above. As a result, the registered product data on the products to be purchased is stored in the shopping file 41 including the terminal ID of the information terminal 10.

In this manner, the customer performs self-registration for each product to be purchased by holding the barcode of the product up to the camera 15 of the information terminal 10 to have it read. After the self-registration is completed, the customer touches the checkout button displayed on the touch panel 14 of the information terminal 10.

Upon detection of the checkout button being touched in the standby state of ACT5 and ACT6, the processor 11 recognizes that a checkout request has been instructed. The processor 11 proceeds from ACT6 to ACT10. In ACT10, the processor 11 controls the wireless unit 16 to output a checkout notification command to the terminal controller 40. As a result of this control, the checkout notification command is transmitted from the wireless unit 16. The checkout notification command is received by the access point 60 and transmitted to the terminal controller 40 via the communications network 50. The checkout notification command includes the terminal ID of the information terminal 10.

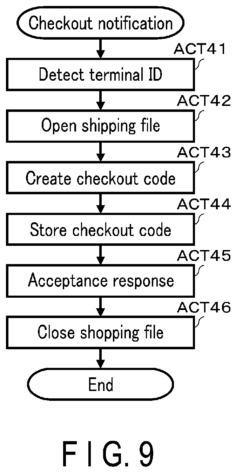

FIG. 9 is a flowchart illustrating the main procedure of a checkout notification command receipt process executed by the terminal controller 40. Upon receipt of a checkout notification command, the terminal controller 40 detects a terminal ID from the checkout notification command in ACT41. Then, in ACT42, the terminal controller 40 opens the shopping file 41 in which the terminal ID is stored.

The terminal controller 40 creates a checkout code in ACT43. For example, the terminal controller 40 creates a unique checkout code by combining the terminal ID and the current date. Having created the checkout code, the terminal controller 40 stores the checkout code in the shopping file 41 in the open state in ACT44. In ACT45, the terminal controller 40 transmits an acceptance response command to the information terminal 10 that transmitted the checkout notification command. Further, in ACT46, the terminal controller 40 closes the shopping file 41 that has been open until then. In the above manner, the terminal controller 40 completes the checkout notification command receipt process.

The acceptance response command includes the terminal ID included in the checkout notification command. The acceptance response command also includes the checkout code created in ACT44. The acceptance response command is transmitted wirelessly via the access point 60 of the communication network 50. The acceptance response command is received by the information terminal 10 to which the terminal ID included in the command is set.

Returning to FIG. 6, the processor 11 of the information terminal 10 that transmitted the checkout notification command waits for an acceptance response in ACT11. Upon receipt of the acceptance response command via the wireless unit 16, the processor 11 proceeds from ACT11 to ACT12. In ACT12, the processor 11 obtains a checkout code from the acceptance response command and displays the checkout code on the touch panel 14 in the form of a machine-readable code such as a barcode or a two-dimensional code.

Thereafter, the processor 11 waits for a termination notification command to be issued in ACT13. The termination notification command is transmitted from the terminal controller 40 in a case where payment is completed for products identified by registered product data stored in the shopping file 41 in which the terminal ID of the information terminal 10 is set. Upon receipt of the termination notification command via the wireless unit 16, the processor 11 proceeds from ACT13 to ACT14. In ACT14, the processor 11 erases the machine-readable code representing the checkout code displayed on the touch panel 14. In the above manner, the processor 11 terminates the information processing in accordance with the self-registration program.

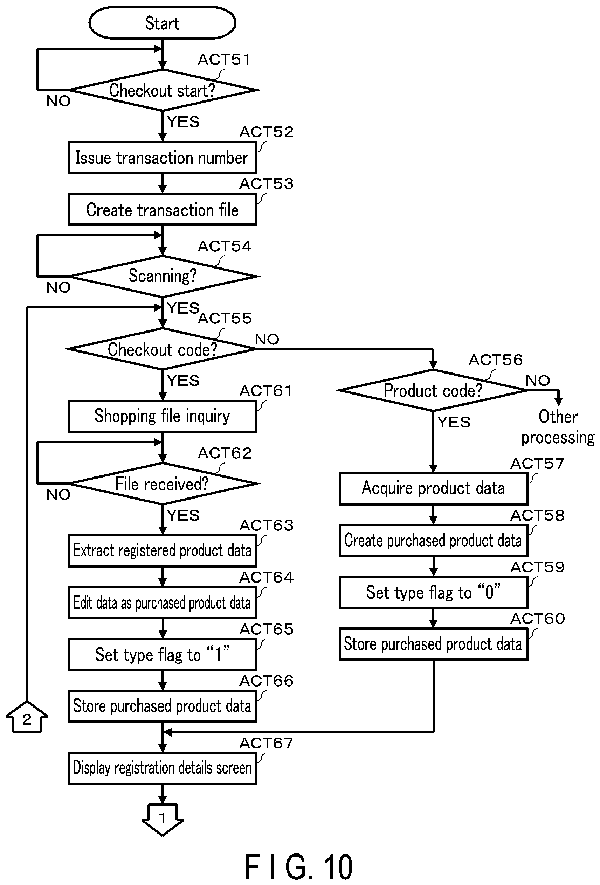

After completing self-registration at the sales area and touching the checkout button, the customer moves to the checkout area where the POS terminal 20 is installed. The customer asks a store clerk who is the operator of the POS terminal 20 to make the payment. At this time, if the customer wishes to additionally purchase a product that is not self-registered, the customer asks the clerk to register it additionally. In response, the clerk operates the POS terminal 20 to process the payment as a single commercial transaction, including not only the products that the customer self-registered, but also the product that the customer wishes to register additionally. Next, the operation of the self-registration system 100 in a case where the clerk operates the POS terminal 20 to process a commercial transaction with a customer will be described with reference to FIG. 10 through FIG. 13.

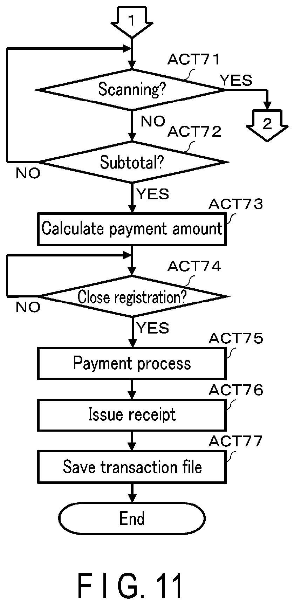

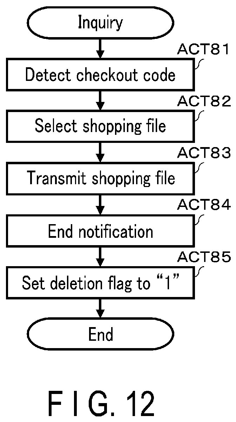

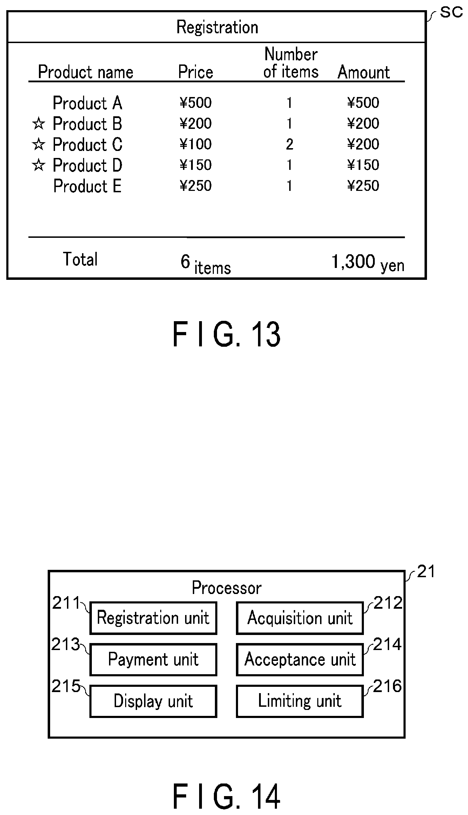

FIG. 10 and FIG. 11 are flowcharts illustrating the main procedure of the information processing that the processor 21 of the POS terminal 20 executes according to the payment program 231. FIG. 12 is a flowchart illustrating the main procedure of the information processing that the terminal controller 40 executes in response to the information processing executed by the POS terminal 20. FIG. 13 is a schematic diagram showing a registration details screen displayed on the touch panel 71 of the POS terminal 20. It should be noted that the procedures and contents of the information processing described below are merely examples. The procedures and contents are not particularly limited as long as similar results can be obtained. The registration details screen shown in FIG. 13 is also an example. The displayed information and its layout can be changed as appropriate.

The processor 21 of the POS terminal 20 waits for a checkout start command to be issued in ACT51. For example, a checkout start button is displayed on the touch panel 71 as a display element, and upon detection of the checkout start button being touched, the processor 21 determines that the checkout start command has been issued. The processor 21 proceeds from ACT51 to ACT52. The processor 21 issues a new transaction number in ACT52. Then, the processor 21 creates a transaction file 81 in ACT53, and stores the new transaction number in the transaction file 81.

Having created the transaction file 81, the processor 21, in ACT54, waits for a machine-readable code being scanned by the scanner 73. Once scanning is performed, the processor 21 checks whether the checkout code has been scanned in ACT55, or the product code has been scanned in ACT56. In a case where a machine-readable code other than the checkout code or the product code is scanned, the processor 21 executes other processing in accordance with that code.

Since the other processing is not the point of the present embodiment, a description thereof will be omitted. It should be noted that a touch operation on the touch panel 71 or a key operation on the keyboard 72 may be performed while scanning is being waited for. In this case as well, the processor 21 executes information processing according to the operation input. Since this information processing is similar to that of the existing POS terminals 20, a description thereof will be omitted.

If the barcode attached to the product is scanned in ACT54, the processor 21 recognizes in ACT56 that the product code has been scanned. The processor 21 proceeds from ACT56 to ACT57. The processor 21 accesses the store server 30 via the communication network 50, and acquires product data such as a product name and a price from the product record including the product code in ACT57. Then, in ACT58, the processor 21 creates purchased product data, including a product code, a product name, a price, the number of items, and an amount. At this time, the processor 21 sets the type flag of the purchased product data to "0" in ACT59. Thereafter, in ACT60, the processor 21 stores the purchased product data with the type flag of "0" in the transaction file 81. The processor 21 then executes the processes of ACT57 to ACT60 to implement the function of the first acquisition unit 211.

On the other hand, if the machine-readable code displayed on the touch panel 14 of the information terminal 10 is scanned in ACT54, the processor 21 recognizes that a checkout code has been scanned in ACT55. The processor 21 proceeds from ACT55 to ACT61. The processor 21 controls the communication interface 25 to transmits an inquiry command for the shopping file 41 in ACT61. By this control, the inquiry command for the shopping file 41 is transmitted via the communication interface 25. The inquiry command is transmitted to the terminal controller 40 via the communication network 50. The inquiry command includes a checkout code.

Having received the inquiry command, the terminal controller 40 starts the receipt process of the procedure shown in FIG. 12. The terminal controller 40 detects the checkout code from the inquiry command in ACT81. Then, in ACT82, the terminal controller 40 selects a shopping file 41 including that checkout code.

In ACT83, the terminal controller 40, which has selected the shopping file 41, transmits the data on the shopping file 41 to the POS terminal 20 that transmitted the inquiry command. In addition, the terminal controller 40 wirelessly transmits a termination notification command, including the terminal ID stored in that shopping file 41, from the access point 60. In ACT85, the terminal controller 40 further rewrites the deletion flag of that shopping file 41 to the value "1" indicating a deleted state. In the above manner, the terminal controller 40 terminates the process of receiving the inquiry command from the POS terminal 20.

Incidentally, the information terminal 10 for which the terminal ID included in the termination notification command is set is the information terminal 10 whose machine-readable code representing the checkout code was read by the scanner 73 of the POS terminal 20. In this information terminal 10, the processor 11 executes the process of ACT14 in FIG. 6, as described above. In other words, the processor 11 erases the machine-readable code representing the checkout code in response to receipt of the selection termination notification command.

Returning to FIG. 10, the processor 21 of the POS terminal 20 that transmitted the shopping file inquiry command waits to receive data on the shopping file 41 in ACT62. Upon receipt of the data on the shopping file 41 via the communication interface 25, the processor 21 proceeds from ACT62 to ACT63. The processor 21 extracts all registered product data from the data on the shopping file 41 in ACT63. The processor 21 adds a type flag to each of the extracted registered product data in ACT64 to convert it into purchased product data. At this time, the processor 21 sets the type flag to "1" in ACT65. Thereafter, in ACT66, the processor 21 stores all the purchased product data with the type flag of "1" in the transaction file 81. Thus, the processor 21 implements the function of the acceptance unit 214 by executing the processes of ACT54 and ACT55. The processor 21 also implements the function of the second acquisition unit 212 by executing the processes of ACT61 to ACT66.

After the purchased product data with a type flag of "0" is stored in the transaction file 81 in ACT60, or the purchased product data with a type flag of "1" is stored in the transaction file 81 in ACT66, the processor 21 advances to ACT67. The processor 21 displays the registration details screen SC (see FIG. 13) on the touch panel 71 in ACT67, based on the data stored in the transaction file 81.

FIG. 13 is an example of what is displayed on the registration details screen SC. The registration details screen SC shows a case where the purchased product data on five products, including product A, product B, product C, product D and product E, is stored in the transaction file 81. The purchased product data on product A is the purchased product data that is stored in the transaction file 81 by scanning a product code before the checkout code is scanned, that is, the purchased product data with a type flag of "0." On the other hand, the purchased product data on products B, C, and D is the purchased product data that is based on the registered product data in the shopping file 41 transferred from the terminal controller 40 in response to the scanning of the checkout code, that is, the purchased product data with a type flag of "1." Furthermore, the purchased product data on product E is the purchased product data that is stored in the transaction file 81 by scanning the product code after the checkout code is scanned, that is, the purchased product data with a type flag of "0."

As shown in FIG. 13, for example, a star-shaped mark is displayed in the registration details information for the product name, price, number of items and amount corresponding to the purchased product data with a type flag of "1." On the other hand, no mark is displayed in the registration details information for the product name, price, number of items and amount corresponding to the purchased product data with a type flag of "0." In this manner, on the registration details screen SC, the registration details information corresponding to the purchased product data with a type flag of "1" and that corresponding to the purchased product data with a type flag of "0" can be distinguished by the presence or absence of a mark. The processor 21 performs the process of ACT67 to implement the function of the display unit 215.

The processor 21 of the POS terminal 20 that has displayed the registration details screen SC proceeds to ACT7171 shown in FIG. 11. The processor 21 waits for either further scanning by the scanner 73 to be performed in ACT71 or for the subtotal key on the keyboard 72 to be pressed in ACT72. If scanning is performed, the processor 21 returns from ACT71 to ACT55 shown in FIG. 10. That is, the processor 21 checks whether the checkout code or the product code is scanned. If the product code is scanned, the processor 21 executes the processes of ACT57 to ACT60 and the process of ACT67 in the same manner as described above. If the checkout code is scanned, the processor 21 executes the processes of ACT61 to ACT66 and the process of ACT67 in the same manner as described above.

Therefore, in the case where the scanner 73 reads the barcode of a product, the purchased product data related to that product is stored in the transaction file 81. Similarly, in the case where the scanner 73 reads the checkout code displayed on the touch panel 14 of another information terminal 10, purchased product data based on the registered product data stored in the shopping file 41 identified by that checkout code is stored in the transaction file 81. Then, the registration details screen SC is updated based on all the purchased product data stored in the transaction file 81. At this time, the type flag of the purchased product data related to the product whose barcode is read by the scanner 73 is "0." The type flag of the purchased product data based on the registered product data of the shopping file 41 whose checkout code is read by the scanner 73 is "1." Therefore, on the registration details screen SC, the purchased product data for the product whose barcode is scanned by the scanner 73 and the purchased product data based on registered product data in the shopping file 41 whose checkout code is scanned by the scanner 73 are displayed in a way that allows them to be distinguished from each other.

In a case where the processor 21 confirms that the subtotal key is pressed in the standby state of ACT71 and ACT72, the processor 21 proceeds to ACT73. In ACT73, the processor 21 calculates a payment amount. That is, the processor 21 calculates a total amount by adding up the amounts of all purchased product data stored in the transaction file 81. If a discount amount is entered after the subtotal key is pressed, the processor 21 subtracts the discount amount from the total amount to determine a payment amount. If no discount amount is entered, the processor 21 uses the total amount in the transaction file 81 as the payment amount.

After calculating the payment amount, the processor 21 waits for a registration closing key to be pressed in ACT74. Closing keys are provided for different payment methods, such as a closing key for cash payment, a closing key for credit card payment, and a closing key for electronic money payment. In a case where one of the closing keys is pressed, the processor 21 proceeds from ACT74 to ACT75. The processor 21 executes a payment process for the selected payment method in ACT75. For example, if cash payment is selected, the processor 21 executes a cash payment process. That is, the processor 21 executes a payment process that subtracts the payment amount from the deposit amount and dispenses the remaining balance as change from the automatic change machine. Since this type of cash payment process is well known, a detailed description will be omitted here. Similarly, the payment process for credit card payment and the payment process for electronic money payment are well known, so that descriptions of them will be omitted. The processor 21 executes the processes of ACT72 to ACT75 to implement the function of the payment unit 213.

After completing the payment process, the processor 21 proceeds to ACT76. In ACT76, the processor 21 creates print data for a receipt, based on the data stored in the transaction file 81, outputs the data to the printer 74, and issues the receipt. The receipt may be issued as an electronic receipt instead of a paper receipt. Incidentally, in this receipt as well, the registration details information corresponding to the purchased product data with a type flag of "1" and that corresponding to the purchased product data with a type flag of "0" can be distinguished by the presence or absence of a mark.

After issuing the receipt, the processor 21 proceeds to ACT77. The processor 21 saves the transaction file 81 in the auxiliary storage device 23 in ACT77. In this manner, the processor 21 completes the information processing initiated after the checkout start is instructed.

As described in detail above, in a case where a customer self-registers a product for purchase using the information terminal 10 in the sales area and requests to pay, the store clerk operating the POS terminal 20 uses the scanner 73 to scan the checkout code displayed on the touch panel 14 of the information terminal 10. By doing so, purchased product data based on the registered product data in the shopping file 41 identified by that checkout code is stored in the transaction file 81. If the customer requests to add a product that has not been self-registered, the store clerk uses the scanner 73 to scan the product code of the product. By doing so, the purchased product data on the product identified by that product code is stored in the transaction file 81.

The product code of the additional product can be scanned either before or after scanning the checkout code. When adding more than one additional product, scanning can be performed either before or after the purchased product data is identified by the product code for each product. In either case, the purchased product data based on the registered product data in the shopping file 41 identified by the checkout code and the purchased product data on the product identified by the product code are stored in the transaction file 81.

Thereafter, the store clerk presses the subtotal key and then the closing key, and the payment process is executed based on the data in the transaction file 81. According to the present embodiment, therefore, it is possible to provide a POS terminal 20 that can process not only products self-registered by the information terminal 10 but also products additionally registered by the POS terminal 20 as a single commercial transaction.

The type flag of purchased product data stored in the transaction file 81 is "0" for products registered by the POS terminal 20, and "1" for products self-registered by the information terminal 10. In a case where the product name, price, etc. of the purchased product data is displayed on the registration details screen SC, a star-shaped mark is added to purchased product data with a type flag of "1." Thus, the store clerk or the customer can easily distinguish between products self-registered in the sales area and those additionally registered at the checkout counter by reviewing the information on the registration details screen SC.

In the present embodiment, the processor 21 of the POS terminal 20 remains in the standby state of ACT71 and ACT72 shown in FIG. 11, even after the checkout code displayed on the touch panel 14 of the information terminal 10 has been scanned and the processes of ACT61 to ACT67 shown in FIG. 10 have been completed. Then, in a case where the checkout code displayed on the touch panel 14 of another information terminal 10 is scanned, the processor 21 executes the processes of ACT61 to ACT67 of FIG. 10 again. Thus, the POS terminal 20 allows products self-registered on two or more information terminals 10 to be paid for together in a single commercial transaction. This function is useful, for example, in a case where family members self-register products in the sales area using their own information terminals 10 and then pay for all the products together at the checkout counter.

The POS terminal 20 can process transactions not only for customers who have self-registered using the information terminal 10, but also for those who have not. Therefore, there is no need to install a separate payment device at the checkout counter of the store exclusively for customers who have self-registered. As a result, the equipment cost can be reduced.

### [Second Embodiment]

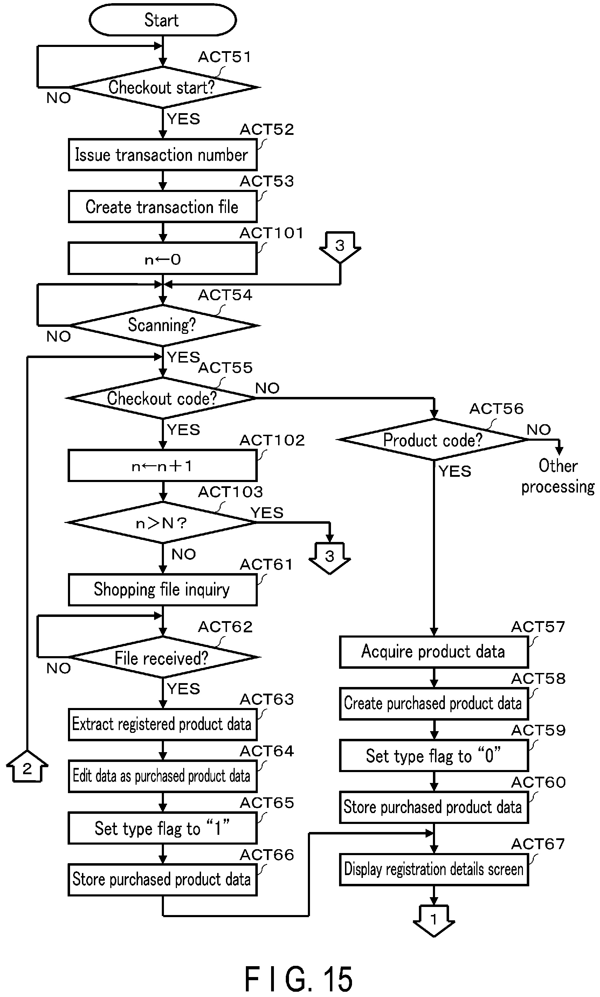

In the first embodiment, the number of information terminals 10 that can be used for a single commercial transaction is unlimited. In the second embodiment, the number of information terminals 10 is limited. The second embodiment will be described below with reference to FIG. 14 and FIG. 15. In the description below, reference will be made to the differences from the first embodiment, and descriptions of the features common to the first embodiment will be omitted.

FIG. 14 is a schematic diagram showing main functions of the processor 21 of a POS terminal 20 used in the second embodiment. As shown in the Figure, the processor 21 has the function of a limiting unit 216, in addition to the functions described in the first embodiment, including those of the first acquisition unit 211, the second acquisition unit 212, the payment unit 213, the acceptance unit 214, and the display unit 215. The limiting unit 216 has the function of limiting identification information accepted by the acceptance unit 214, that is, the number of checkout codes. The function of the limiting unit 216 will be described in connection with the information processing that the processor 21 of the POS terminal 20 executes according to the payment program 231.

FIG. 15 is a flowchart illustrating the first half of the main procedure of the information processing that the processor 21 of the POS terminal 20 executes according to the payment program 231 in the second embodiment. It should be noted that identical reference symbols are assigned to the portions common to the information processing described in the first embodiment with reference to FIG. 10. The latter half is common to the first embodiment described with reference to FIG. 11, and thus illustration thereof is omitted.

That is, in the second embodiment, the processor 21 creates a transaction file in ACT53, and then resets the counter n to "0" in ACT101. Subsequently, the processor 21 waits for scanning to be performed in ACT54. If a product code is scanned at this point, the processor 21 proceeds from ACT54 to ACT56, and then further to ACT57. The processor 21 executes the processes of ACT57 to ACT60 and the process of ACT67 in the same manner as in the first embodiment.

If a checkout code is scanned, the processor 21 advances from ACT54 to ACT55, and then further to ACT102. The processor 21 counts up the counter n by "1" in ACT102. Then, the processor 21 checks whether the counter n exceeds the upper limit value N in ACT103. The upper limit value N is the maximum number of information terminals 10 that can be used for collective payment in a single commercial transaction. The upper limit value N is any integer equal to or greater than "1." The upper limit value N can be set arbitrarily, for example, by a store that uses the self-registration system 100.

If the counter n does not exceed the upper limit value N, the processor 21 proceeds from ACT103 to ACT61. The processor 21 then executes the processes of ACT61 to ACT66 and the process of ACT67 in the same manner as in the first embodiment. In contrast, if the counter n exceeds the upper limit value N, the processor 21 does not execute the processes from ACT61 onward. The processor 21 returns from ACT103 to ACT54.

By executing the processes from ACT101 to ACT103, the processor 21 implements the function of the limiting unit 216, which restricts the number of checkout codes that can be entered in a single commercial transaction to be equal to or less than the upper limit value N.

In this way, the second embodiment provided with the limiting unit 216 allows setting a limit on the number of information terminals 10 that can be used for collective payment in a single commercial transaction. For example, by setting the upper limit value N to "1," the number of information terminals 10 that can be used for collective payment in a single commercial transaction is limited to one. Similarly, by setting the upper limit value N to "2," the number of information terminals 10 that can be used for collective payment in a single commercial transaction is limited to two.

By setting a limit on the number of information terminals 10 in this way, data for products self-registered by different customers are prevented from being incorrectly combined into a single commercial transaction.

### [Third Embodiment]

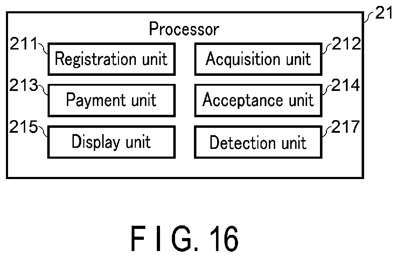

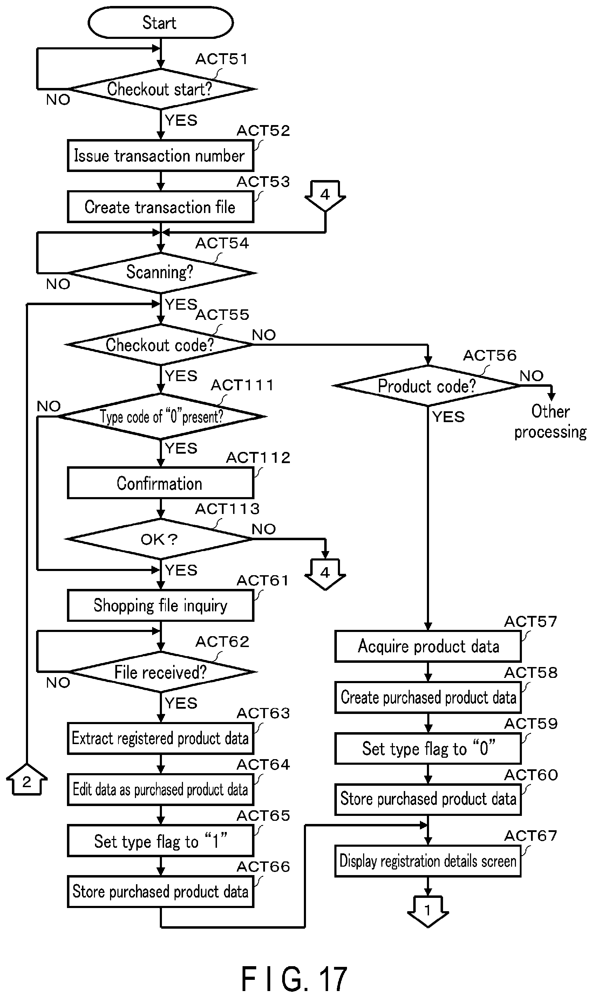

In the first embodiment, if a checkout code is scanned in the state where the POS terminal 20 registers a product by scanning a barcode, the purchased product data, which is based on the registered product data identified by the checkout code in the shopping file 41, is unconditionally stored in the transaction file 81. However, if the purchased product data is stored unconditionally, checkout codes of different customers cannot be prevented from being scanned by accident, leading to the data being incorrectly combined into a single commercial transaction. In this regard, although the second embodiment limits the number of information terminals 10, it cannot prevent errors where data on products purchased by a customer using self-registration is mistakenly combined with data on products purchased by a customer not using self-registration. In the third embodiment, therefore, the operator is allowed to confirm whether or not product information identified by the identification information received by the acceptance unit should be acquired from an external system. By performing such a confirmation, the above-mentioned errors can be prevented in advance. The third embodiment will be described below with reference to FIG. 16 and FIG. 17. In the description below, reference will be made to the differences from the first embodiment, and descriptions of the features common to the first embodiment will be omitted.

FIG. 16 is a schematic diagram showing the main functions of the processor 21 of the POS terminal 20 used in the third embodiment. As shown in the figure, the processor 21 has the function of a detection unit 217, in addition to the functions described in the first embodiment, including those of the first acquisition unit 211, the second acquisition unit 212, the payment unit 213, the acceptance unit 214, and the display unit 215. The detection unit 217 has the function of detecting an instruction as to whether or not to acquire identification information received by the acceptance unit 214, that is, information on a product identified by a checkout code, from an external system. The function of the detection unit 217 will be described in connection with the information processing that the processor 21 of the POS terminal 20 executes according to the payment program 231.

FIG. 17 is a flowchart illustrating the first half of the main procedure of the information processing that the processor 21 of the POS terminal 20 executes according to the payment program 231 in the third embodiment. It should be noted that identical reference symbols are assigned to portions common to the information processing described in connection with the first embodiment with reference to FIG. 10. The latter half is common to the first embodiment described with reference to FIG. 11, and thus illustration thereof is omitted.

In the third embodiment, in a case where a checkout code is scanned in ACT54, the processor 21 proceeds from ACT55 to ACT111. In ACT111, the processor 21 checks whether purchased product data with a type code of "0" is stored in the transaction file 81. If no purchased product data with a type code of "0" is stored, this indicates that product registration by scanning a barcode is not performed before the checkout code is scanned. The processor 21 proceeds from ACT111 to ACT61. The processor 21 then executes the processes of ACT61 to ACT66 and the process of ACT67 in the same manner as in the first embodiment.

On the other hand, if purchased product data with a type code of "0" is stored, the processor 21 proceeds from ACT111 to ACT112. In ACT112, the processor 111 displays a confirmation screen on the touch panel 71. The confirmation screen is a screen that allows the store clerk who operates the POS terminal 20 to verify whether or not to acquire data for a self-registered product. The confirmation screen has an OK button that allows data acquisition and an NG button that does not allow the acquisition.

The processor 21 waits in ACT113 for either the OK button or the NG button to be pressed. If the OK button is pressed, the processor 21 proceeds from ACT113 to ACT61. The processor 21 then executes the processes of ACT61 to ACT66 and the process of ACT67 in the same manner as in the first embodiment.

On the other hand, if the NG button is pressed, the processor 21 returns from ACT113 to ACT54. That is, the processor 21 ignores the scanning of the checkout code and waits for the next scanning.

By executing the processes of ACT111 to ACT113, the processor 21 implements the function of the detection unit 217.

In this manner, in the third embodiment provided with the detection unit 217, the store clerk confirms whether or not to acquire the shopping file 41 data identified by the identification information received from the terminal controller 40 via the acceptance unit 214. The shopping file 31 data is downloaded from the terminal controller 40 to the POS terminal 20 only in a case where an instruction to do so is issued. Thus, it is possible to prevent errors where data on products purchased by a customer using self-registration is mistakenly combined with data on products purchased by a customer not using self-registration.

Although several embodiments have been described above, they are not intended to be restrictive.

For example, in each of the above embodiments, it is assumed that the operator of the POS terminal 20 is a store clerk. The operator may be a customer. In other words, the POS terminal 20 may be a self-service POS terminal.

For example, in the above embodiments, it is assumed that each product has a barcode indicating a product code. In this regard, it is not always necessary for each product to have a barcode. For products without barcodes, the registration process can be performed using a well-known method, such as selecting from a list of non-barcoded products displayed on the touch panel. In addition, the present embodiment can be applied to a system in which an RFID tag is attached to each product and the product registration process is performed by reading the RFID tag with a tag reader.

In the embodiments described above, the registration details screen SC distinguishes between registration details information corresponding to purchased product data with a type flag of "1" and that corresponding to purchased product data with a type flag of "0," based on the presence or absence of a mark. In this regard, identification can also be achieved using various types of marks. Alternatively, the registration details information corresponding to the purchased product data with a type flag of "1" and that corresponding to the purchased product data with a type flag of "0" may be displayed separately to make them distinguishable.

A payment device of the present embodiment described above is as follows:
(1) A payment device comprising:
   a first acquisition unit that acquires product information, based on product-related data entered via an input device;
   a second acquisition unit that acquires stored product information from an external system, based on product-related data entered via an information terminal; and
   a payment unit that makes a payment based on the product information acquired by the first acquisition unit and the second acquisition unit.
(2) The payment device as recited in (1), further comprising:
   an acceptance unit that accepts identification information for identifying the product information acquired from the external system,
   wherein the second acquisition unit acquires, from the external system, the product information identified by the identification information accepted by the acceptance unit.
(3) The payment device as recited in (2), further comprising:
   a limiting unit that limits the number of pieces of the identification information accepted by the acceptance unit.
(4) The payment device as recited in (2) or (3), further comprising:
   a detection unit that detects an instruction as to whether or not to acquire, from the external system, the product information identified by the identification information accepted by the acceptance unit,
   wherein the second acquisition unit acquires, from the external system, the product information identified by the identification information accepted by the acceptance unit on the condition that the detection unit detects an instruction to acquire information from the external system.
(5) The payment device as recited in any one of (1) through (4), further comprising:
   a display unit that displays the product information acquired by the first acquisition unit and the product information acquired by the second acquisition unit in a distinguishable manner.
(6) A payment program for causing a computer of a payment device to function as:
   a first acquisition unit that acquires product information, based on product-related data entered via an input device;
   a second acquisition unit that acquires stored product information from an external system, based on product-related data entered via an information terminal; and
   a payment unit that makes a payment, based on the product information acquired by the first acquisition unit and the second acquisition unit.
(7) A computer-readable storage medium storing a payment program for causing a computer of a payment device to function as:
   a first acquisition unit that acquires product information, based on product-related data entered via an input device;
   a second acquisition unit that acquires stored product information from an external system, based on product-related data entered via an information terminal; and
   a payment unit that makes a payment, based on the product information acquired by the first acquisition unit and the second acquisition unit.

The program according to the present embodiment may be transferred either in a state where it is stored in an electronic device or in a state where it is not stored in the electronic device. In the latter case, the program may be transferred via a network or in a state where it is stored on a storage medium. The storage medium is a non-transitory tangible medium. The storage medium is a computer-readable medium. The storage medium may be in any form as long as it is capable of storing a program and is computer-readable, such as a CD-ROM or a memory card.

These novel embodiments are presented as examples and are not intended to limit the scope of the invention. Indeed, the embodiments can be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope of the invention.

## Claims

1. A payment device comprising:
a first acquisition unit that acquires product information, based on product-related data entered via an input device;
a second acquisition unit that acquires stored product information from an external system, based on product-related data entered via an information terminal; and
a payment unit that makes a payment, based on the product information acquired by the first acquisition unit and the second acquisition unit.

2. The payment device according to claim 1, further comprising:
an acceptance unit that accepts identification information for identifying the product information acquired from the external system,
wherein the second acquisition unit acquires, from the external system, the product information identified by the identification information accepted by the acceptance unit.

3. The payment device according to claim 2, further comprising:
a limiting unit that limits a number of pieces of identification information accepted by the acceptance unit.

4. The payment device according to claim 2, further comprising:
a detection unit that detects an instruction as to whether or not to acquire, from the external system, the product information identified by the identification information accepted by the acceptance unit,
wherein the second acquisition unit acquires, from the external system, the product information identified by the identification information accepted by the acceptance unit on condition that the detection unit detects an instruction to acquire information from the external system.

5. The payment device according to any one of claims 1 through 4, further comprising:
a display unit that displays the product information acquired by the first acquisition unit and the product information acquired by the second acquisition unit in a distinguishable manner.

6. A payment program for causing a computer of a payment device to function as:
a first acquisition unit that acquires product information, based on product-related data entered via an input device;
a second acquisition unit that acquires stored product information from an external system, based on product-related data entered via an information terminal; and
a payment unit that makes a payment, based on the product information acquired by the first acquisition unit and the second acquisition unit.

7. A computer-readable storage medium storing a payment program for causing a computer of a payment device to function as:
a first acquisition unit that acquires product information, based on product-related data entered via an input device;
a second acquisition unit that acquires stored product information from an external system, based on product-related data entered via an information terminal; and
a payment unit that makes a payment, based on the product information acquired by the first acquisition unit and the second acquisition unit.
